## Europäisches Patentamt

## European Patent Office

## Office européen des brevets

(19)

(11) Veröffentlichungsnummer: **0 152 529**
**B1**

# (12) EUROPÄISCHE PATENTSCHRIFT

(45) Veröffentlichungstag der Patentschrift:
**10.05.89**

(51) Int. Cl.⁴: **F 22 B 31/00,** F 23 C 11/02

(21) Anmeldenummer: **84112029.8**

(22) Anmeldetag: **08.10.84**

(54) **Dampferzeuger mit einer stationären Wirbelschichtfeuerung.**

(30) Priorität: **21.02.84 DE 3406200**

(43) Veröffentlichungstag der Anmeldung:
**28.08.85 Patentblatt 85/35**

(45) Bekanntmachung des Hinweises auf die Patenterteilung:
**10.05.89 Patentblatt 89/19**

(84) Benannte Vertragsstaaten:
**AT BE CH DE FR GB IT LI NL SE**

(56) Entgegenhaltungen:
**DE-A-2 804 073**
**DE-A-3 004 847**
**US-A-2 842 102**

**B.W.K. BRENNSTOFF-WÄRME-KRAFT, Band 36,
Nr. 11, November 1983, Seiten 453-458, Würzburg,
DE; H. STEVEN: "Entwicklung und Ausführung
fortgeschrittener Wirbelschicht-
Dampferzeugertechnik"**

(73) Patentinhaber: **Deutsche Babcock Werke
Aktiengesellschaft, Duisburger Strasse 375,
D-4200 Oberhausen 1 (DE)**

(72) Erfinder: **Jarmuzewski, Hans- Georg,
Hiberniastrasse 96, D-4200 Oberhausen 1 (DE)**

(74) Vertreter: **Müller, Jürgen, Dipl.- Ing., Deutsche
Babcock AG Lizenz- und Patentabteilung
Duisburger Strasse 375, D-4200 Oberhausen 1 (DE)**

EP 0 152 529 B1

## Beschreibung

Die Erfindung betrifft einen Dampferzeuger mit einer stationären Wirbelschichtfeuerung mit den Merkmalen des Oberbegriffes des Anspruches 1.

Ein solcher Dampferzeuger ist aus Brennstoff-Wärme-Kraft, 35 (1983), Seiten 453 bis 458 bekannt. Der Kesselteil dieses Dampferzeugers ist in zwei Module unterteilt, die jeweils eine Wirbelschicht, eine Brennkammer, ein Gasabzugsrohr und einen Zyklon mit einem Ascherückführsystem enthalten.

Ein anderer bekannter, mit einer Wirbelschichtfeuerung versehener und als Mehrzugkessel ausgebildeter Dampferzeuger (Chemie-Ingenieur-Technik, 51 (1979), Nr. 3, Seite 188) weist mehrere ab- und zuschaltbare Sektionen zur Teillastregelung auf. Der bekannte Dampferzeuger ist als Mehrzugkessel ausgebildet. Einige der Sektionen sind nur mit Verdampfer-Heizflächen ausgerüstet, während die übrigen mit Verdampfer- und Mittelüberhitzer-Heizflächen versehen sind. Diese Kesselausgestaltung erschwert eine Teillastregelung.

Weiterhin ist ein Dampferzeuger mit einer Wirbelschichtfeuerung bekannt (VDI-Berichte Nr. 322, 1978, Seite 10), der die Kohle über Wurfbeschicker gleichmäßig zugeführt wird. Die aus der Wirbelschicht ausgetragenen unverbrannten Kohle-Teilchen werden mit Hilfe von Sekundärluft oberhalb der Wirbelschicht nachverbrannt. Die Wirbelschicht ist bei diesem Dampferzeuger nicht in Sektionen aufgeteilt. Die Ofenleistung wird über die Verbrennungsluftmenge geregelt.

Der Erfindung liegt die Aufgabe zugrunde, einen Dampferzeuger mit einer stationären, in abschaltbare Sektionen aufgeteilten Wirbelschichtfeuerung derart zu verbessern, daß bei einer hohen Gesamtleistung eine Teillastregelung in einfacher Weise ermöglicht wird.

Diese Aufgabe wird bei einem gattungsgemäßen Dampferzeuger durch die kennzeichnenden Merkmale des Anspruches 1 gelöst. Vorteilhafte Ausgestaltungen der Erfindung sind in den abhängigen Ansprüchen angegeben.

Bei diesem erfindungsgemäßen Dampferzeuger sind jeder Sektion der Wirbelschichtfeuerung alle die Elemente zugeordnet, die es ermöglichen, diese eine betreffende Sektion für sich allein zu betreiben. Dabei ist die Unterteilung in die Sektionen auf den Bereich der Wirbelschicht beschränkt, während der die Brennkammer bildende Gassammelraum allen Wirbelschichtsektionen gemeinsam ist. Auf diese Weise wird ein Kessel mit hoher Gesamtleistung geschaffen, wobei eine Teillastregelung durch die Abschaltung einzelner Sektionen möglich ist.

Ein Ausführungsbeispiel der Erfindung ist in der Zeichnung dargestellt und wird im folgenden näher erläutert. Es zeigen:

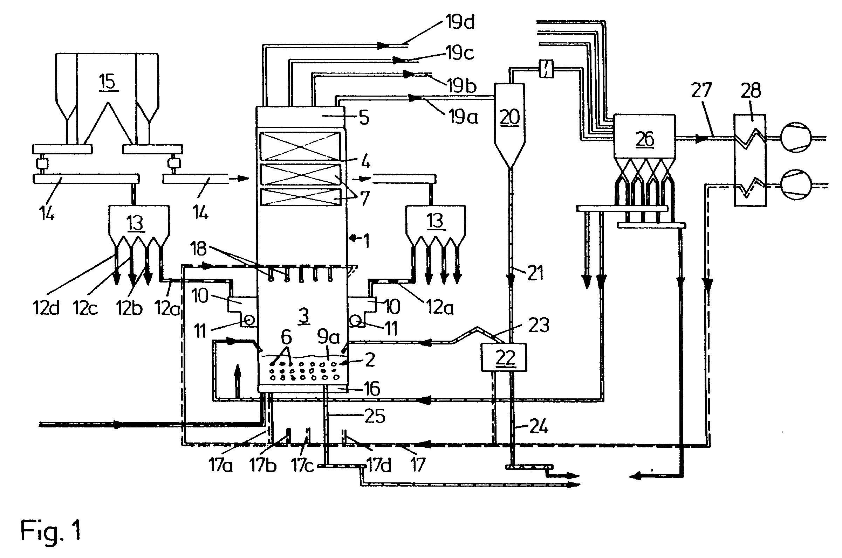

Fig. 1 das Schema eines Dampferzeugers gemäß der Erfindung und

Fig. 2 die Seitenansicht des Kessels gemäß Fig. 1.

Der dargestellte Dampferzeuger 1 ist als Einzugkessel ausgebildet und weist in seinem unteren Teil eine Wirbelschichtfeuerung 2 auf. Oberhalb der Wirbelschicht 2 ist eine Brennkammer 3 und ein sich daran anschließender Gaszug 4 vorgesehen Der Gaszug 4 geht in einen Gasabzug 5 über.

Die die Wirbelschicht 2, die Brennkammer 3 und den Gaszug 4 umschließenden Wände sind aus gasdicht miteinander über Stege verschweißten Rohre gebildet. Diese Rohre sind als Verdampferheizflächen geschaltet. Im Bereich der Brennkammer 3 sind die Rohre bestiftet und mit einer feuerfesten Masse bestampft. In der Wirbelschichtfeuerung 2 sind Eintauchheizflächen 6 angeordnet, die als verdampferheizflächen und als Überhitzerheizflächen geschaltet sind. In dem Gaszug 4 sind Nachschaltheizflächen 7 vorgesehen, die den Economiser und den Zwischenüberhitzer darstellen.

Die Wirbelschichtfeuerung ist als stationäre Wirbelschicht ausgebildet. Sie ist durch Trennwände 8, die bis zur Oberkante der Wirbelschicht 2 reichen, in Sektionen 9a, 9b, 9c und 9d aufgeteilt. Im dargestellten Fall sind vier Sektionen 9 vorgesehen. Die Trennwände 8 bestehen aus Rohrwänden, die an das Kesselsystem angeschlossen sind. Die Bündel der Eintauchheizflächen 6 und der Nachschaltheizflächen 7 liegen quer zu den Sektionen 9a, 9b, 9c, 9d.

Die Sektionen 9a, 9b, 9c, 9d sind hinsichtlich der Führung von Luft, Brennstoff, Asche und Additive voneinander getrennt und können einzeln ab- und zugeschaltet werden. Jede Sektion 9 ist auf zwei gegenüberliegenden Seiten mit je einem Wurfbeschicker 10 versehen. Die Wurfbeschicker 10 enthalten Kohleschleudern 11, die den Kohlestrom aus ungetrockneter und ungemahlener Kohle bis zu einer maximalen Korngröße von etwa 25 mm von beiden Seiten in die Wirbelschichtfeuerung eintragen. Der Wurfbereich zweier gegenüberliegender Wurfbeschicker 10 entspricht dem Querschnitt einer Sektion 9.

Jeder Wurfbeschicker 10 ist über eine eigene Kohleleitung 12a, 12b 12c, 12d mit einem Vorlagebunker 13 verbunden. Auf jeder Seite des Dampferzeugers 1 ist ein solcher Vorlagebunker 13 vorgesehen, an den alle auf einer Seite angeordneten Wurfbeschicker 10 angeschlossen sind. Die Vorlagebunker 13 werden über ein Band- und Mischsystem 14 aus einem Tagesbunker 15 für Kohle und Kalk gespeist.

Unterhalb der Wirbelschichtfeuerung 2 ist ein Luftkasten 16 angeordnet, der in der gleichen Weise wie die Wirbelschicht 2 in Sektionen 16a, 16b, 16c, 16d aufgeteilt ist. Gegenüber der Wirbelschicht 2 ist der Luftkasten 16 durch einen gekühlten Boden getrennt, durch den Luftdüsen geführt sind. Jede Sektion des Luftkastens 16 ist mit einer Luftleitung 17 verbunden, über die die Sektionen 9a, 9b, 9c, 9d der Wirbelschicht 2 mit einer solchen Menge an Verbrennungsluft versorgt werden, die zur Aufrechterhaltung des Wirbelzustandes und für eine nahstöchiometrische Verbrennung ausreichend ist. Oberhalb jeder Sektion 9a, 9b, 9c, 9d der Wirbelschicht 2 sind innerhalb der Brennkammer 3 Sekundärluftzuführungen 18 vorgesehen. Durch diese Sekundärluftzuführungen wird ein Luftüberschuß von etwa n = 1,25 eingestellt. Auf diese Weise lassen sich in der Wirbelschicht 2 die Bedingungen einstellen, durch die eine verminderte Bildung von $NO_x$ erreicht werden kann.

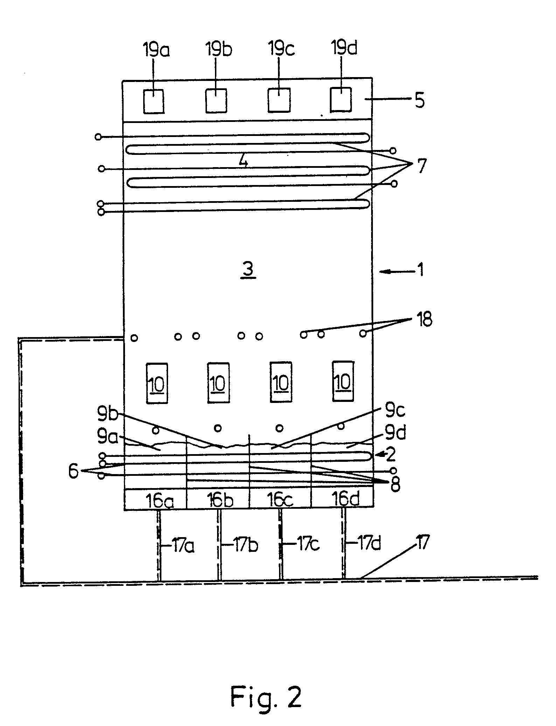

Der in dem oberen Teil des Dampferzeugers 1 angeordnete Gasabzug 5 weist oberhalb jeder Sektion 9a, 9b, 9c, 9d der Wirbelschicht 2 je ein Gasabzugsrohr 19a, 19b, 19c, 19d auf (Fig. 2). Jedes Gasabzugsrohr 19a, 19b, 19c, 19d ist zu einem Zyklon 20 geführt, in welchem der von dem Rauchgas mitgerissene, im wesentlichen aus Asche mit einem restlichen Anteil an Unverbranntem bestehende Flugstaub abgetrennt wird.

Der Feststoffaustrag des Zyklons 20 ist über eine Ascheleitung 21 mit einem Siphon 22 verbunden. Mit Hilfe von Luft wird die Asche über eine Rückführleitung 23 in die Wirbelschicht 2 und zwar in die dem Zyklon 20 zugeordnete Sektion 9a, 9b, 9c bzw. 9d rückgeführt. Die Rückführleitung 23 mündet jeweils kurz oberhalb der Wirbelschichtfeuerung 2 in die Brennkammer 3 ein. Ein Teil der Asche wird über eine Ablaßleitung 24, die an den Siphon 22 angeschlossen ist, aus dem System entfernt. Zusätzlich zu dieser Ablaßleitung 24 ist die Wirbelschicht 2 mit einer Abzugsleitung 25 versehen, über die die Wirbelschichtfeuerung 2 vollständig entleert werden kann.

Die an den Feststoffantrag des Zyklons 20 angeschlossene Ascheleitung 21 kann auch mit dem Vorlagebunker 13 verbunden sein. In diesem Fall erfolgt die Rückführung der Asche über den Wurfbeschicker 10 in die dem jeweiligen Zyklon 20 zugeordnete Sektion 9a, 9b, 9c, 9d der Wirbelschicht.

Über das aus Zyklon 20, Ascheleitung 21 und Rückführleitung 23 bestehende System wird der stationären Wirbelschicht ein Ascheumlauf überlagert. Der Umlaufmenge wird zur Verbesserung des Ausbrandes und der Schwefeleinbindung auf die jeweilige Brennstoffart abgestimmt. Niederflüchtige und schlecht zündende Kohlen sowie Sonderbrennstoffe erfordern eine höhere Umlaufmenge als zum Beispiel Braunkohle. Die Umlaufmenge wird durch die Wirbelgeschwindigkeit innerhalb der Wirbelschicht eingestellt. Kann die Wirbelgeschwindigkeit nicht erhöht werden, oder ist eine erhöhte Wirbelgeschwindigkeit unerwünscht, so sind die Zyklone 20 mit Einbauten zu versehen, die den Abscheidegrad der Zyklone 20 erhöhen. Der durch die Einbauten erzeugte Abscheidegrad wird auf die gewünschte Umlaufmenge abgestellt.

Die Temperatur der Rauchgase ist am Eintritt in den Zyklon 20 auf etwa 350° eingestellt. Damit wird Asche mit einer verhältnismäßig hohen Temperatur in die Wirbelschicht zurückgeführt, so daß die aus Asche und Unverbrannten bestehenden Partikel eine kürzere Wiederaufheizzeit haben als bei einer weitgehenden Abkühlung des Rauchgases und damit der Asche.

Den Zyklonen 20 ist ein Heißgasfilter 26 nachgeschaltet, das aus einem Elektrofilter, einem Gewebefilter oder einem sonstigen Filter bestehen kann. Der in diesem Filter abgeschiedene Staub wird entweder in die Wirbelschichtfeuerung rückgeführt oder abgezogen. Das Heißgasfilter 26 ist über eine Gasleitung 27 mit einem Luftvorwärmer 28 verbunden, der rotierende Speichermassen aufweist und an den die Luftleitung 17 angeschlossen ist.

## Patentansprüche

1. Als Einzugskessel ausgebildeter Dampferzeuger mit einer stationären Wirbelschichtfeuerung (2), oberhalb der eine Brennkammer (3) und ein Gaszug (4) mit darin angeordneten Nachschaltheizflächen (7) vorgesehen sind, wobei in der Wirbelschicht Eintauchheizflächen (6) angeordnet sind, die Wirbelschicht in mehrere einzeln abschaltbare Sektionen (9a, 9b, 9c, 9d) aufgeteilt ist, denen jeweils ein Gasabzugsrohr (19a, 19b, 19c, 19d) zugeordnet ist und wobei jedes Gasabzugsrohr (19a, 19b, 19c, 19d) mit einem Zyklon (20) verbunden ist, dessen Austrag zu der betreffenden Sektion (9a, 9b, 9c, 9d) geführt ist, dadurch gekennzeichnet daß die Brennkammer (3) allen Sektionen (9a, 9b, 9c, 9d) der Wirbelschicht gemeinsam ist, daß in der Brennkammer (3) oberhalb jeder Sektion (9a, 9b, 9c, 9d) Sekundärluftzuführung (18) angeordnet sind und daß jeder Sektion (9a, 9b, 9c, 9d) Wurfbeschicker (10) zugeordnet sind, deren Wurfbereich dem Querschnitt einer Sektion (9a, 9b, 9c, 9d) entspricht.

2. Dampferzeuger nach Anspruch 1, dadurch gekennzeichnet, daß die Gastemperatur am Eintritt in den Zyklon (20) auf 350° C eingestellt ist.

3. Dampferzeuger nach den Ansprüchen 1 oder 2, dadurch gekennzeichnet, daß den Zyklonen (20) im Rauchgasweg ein Heißgasfilter (26) und diesem ein Luftvorwärmer (28) mit rotierenden Speichermassen nachgeschaltet ist.

4. Dampferzeuger nach einem der Ansprüche 1 bis 3, dadurch gekennzeichnet, daß in der von Austrag des Zyklons (20) zu der

Wirbelschichtfeuerung (2) führenden Ascheleitung (21) ein Ascheaustrag angeordnet ist.

5. Dampferzeuger nach einem der Ansprüche 1 bis 4, <u>dadurch gekennzeichnet</u>, daß die Brennkammer (3) von durchströmten Rohren begrenzt ist, die auf ihrer der Brennkammer (3) zugewandten Seite bestiftet und mit einer feuerfesten Masse bestampft sind.

6. Dampferzeuger nach einem der Ansprüche 1 bis 5, <u>dadurch gekennzeichnet</u>, daß die Eintauchheizflächen (6) oder ein Teil dieser Eintauchheizflächen (6) als Überhitzer geschaltet sind.

7. Dampferzeuger nach einem der Ansprüche 1 bis 6, <u>dadurch gekennzeichnet</u>, daß die Wirbelschicht einen überlagerten Ascheumlauf von definierter, dem jeweiligen Brennstoff angepaßter Menge aufweist.

8. Dampferzeuger nach Anspruch 7, <u>dadurch gekennzeichnet</u>, daß die Umlaufmenge über die Wirbelgeschwindigkeit innerhalb der Wirbelschicht einstellbar ist.

9. Dampferzeuger nach Anspruch 7, <u>dadurch gekennzeichnet</u>, daß die Umlaufmenge durch einen über Einbauten veränderbaren Abscheidegrad der Zyklone (20) einstellbar ist.

## Claims

1. Steam generator constructed as single-pass boiler with a stationary fluidised bed (2), above which a combustion chamber (3) and a gas flue (4) with convection heating surfaces (7) arranged therein are provided, wherein immersed heating surfaces (6) are arranged in the fluidised bed, the fluidised bed is divided up into several individually disconnectable sections (9a, 9b, 9c, 9d), each of which is associated with a respective gas flue duct (19a, 19b, 19c, 19d), and wherein each gas flue duct (19a, 19b, 19c, 19d) is connected with a cyclone (20), the discharge of which is conducted to the section (9a, 9b, 9c, 9d) concerned, characterised thereby, that the combustion chamber (3) is common to all sections (9a, 9b, 9c, 9d) of the fluidised bed, that secondary air feeds (18) are arranged above each section (9a, 9b, 9c, 9d) in the combustion chamber (3) and that each section (9a, 9b, 9c, 9d) is associated with spreaders (10), the spreading range of which corresponds to the cross-section of a section (9a, 9b, 9c, 9d).

2. Steam generator according to claim 1, characterised thereby, that the gas temperature at the entry into the cyclone (20) is set to 350° C.

3. Steam generator according to claim 1 or 2, characterised thereby, that a hot gas filter (26) is connected downstream of the cyclones (20) in the flue gas path and an air pre-heater (28) with rotating storage masses is connected downstream of this.

4. Steam generator according to one of the claims 1 to 3, characterised thereby, that an ash discharge is arranged in the ash duct (21) leading from the discharge of the cyclone (20) to the fluidised bed (2).

5. Steam generator according to one of the claims 1 to 4, characterised thereby, that the combustion chamber (3) is bounded by ducts which are flowed through and on their side facing the combustion chamber (3) are studded and stamped with a refractory mass.

6. Steam generator according to one of the claims 1 to 5, characterised thereby, that the immersed heating surfaces (6) or a part of these immersed heating surfaces (6) are connected as superheaters.

7. Steam generator according to one of the claims 1 to 6, characterised thereby, that the fluidised bed displays a superimposed ash circulation of defined quantity adapted to the respective fuel.

8. Steam generator according to claim 7, characterised thereby, that the circulating quantity is settable by way of the fluidising speed within the fluidised bed.

9. Steam generator according to claim 7, charcterised thereby, that the circulating quantity is settable through a degree of separation, variable by way of components, of the cyclone (20).

## Revendications

1. Un générateur de vapeur réalisé sous forme de chaudière à un parcours comprend un foyer à lit fluidisé stationnaire (2), au-dessus duquel sont prévus une chambre de combustion (3) avec un parcours de gaz (4) contenant à l'intérieur des surfaces de chauffe disposées en séries (7), des surfaces de chauffe immergées (6) étant disposées dans le lit fluidisé, réparties en plusieurs sections isolables individuellement (9a, 9b, 9c, 9d), à qui est chaque fois affecté un tube d'échappement de gaz (19a, 19b, 19c, 19d), chaque tube d'échappement de gaz (19a, 19b, 19c, 19d) étant relié à un cyclone (20) dont l'évacuation est amenée à la section (9a, 9b, 9c, 9d) concernée, caractérisé en ce que la chambre de combustion (3) est commune à toutes les sections (9a, 9b, 9c, 9d) du lit fluidisé, en ce que des alimentations d'air secondaire (18) sont disposées dans la chambre de combustion (3), au-dessus de chaque section (9a, 9b, 9c, 9d) et que des chargeurs par projection (10) sont affectés à chaque section (9a, 9b, 9c, 9d), dont la zone de projection correspond à la section transversale d'une section (9a, 9b, 9c, 9d)

2. Générateur de vapeur selon la revendication 1, caractérisé en ce que la température des gaz à l'entrée du cyclone (20) est réglée à 350° C.

3. Générateur de vapeur selon la revendication 1 ou 2, caractérisé en ce que, dans le parcours des fumées, un filtre à gaz chauds (26) est monté en aval du cyclone (20) et qu'un préchauffeur d'air (28) à masse d'accumulation tournante est monte en aval du cyclone.

4. Générateur de vapeur selon l'une des revendications 1 à 3, caractérisé en ce qu'une évacuation de cendre est agencée, allant de l'évacuation du cyclone (20) jusqu'au foyer à lit fluidisé (2).

5. Générateur de vapeur selon l'une des revendications 1 à 4, caractérisé en ce que la chambre de combustion (3) est délimitée par des tubes parcourus par un écoulement et qui sont garnis de picots du côté tourné vers la chambre de combustion (3) et garnis d'une masse réfractaire.

6. Générateur de vapeur selon l'une des revendications 1 à 5, caractérisé en ce que les surfaces de chauffe immergées (6), ou une partie de ces surfaces de chauffe immergées (6) sont branchées en surchauffeur.

7. Générateur de vapeur selon l'une des revendications 1 à 6, caractérisé en ce que le lit fluidisé présente une recirculation des cendres superposée, d'un débit défini, adapté à chaque combustible.

8. Générateur de vapeur selon la revendication 7, caractérisé en ce que le débit recirculé est réglable par la vitesse de tourbillonnement dans le lit fluidisé.

9. Générateur de vapeur selon la revendication 7, caractérisé en ce que le débit recirculé est réglable par un degré de séparation du cyclone (20), modifiable par des parties rapportées.

Fig. 1

Fig. 2